# EUROPÄISCHE PATENTSCHRIFT

(11) **EP 1 169 900 B1**
(45) Veröffentlichungstag und Bekanntmachung des Hinweises auf die Patenterteilung: **26.10.2005**
(21) Anmeldenummer: 00114404.7
(22) Anmeldetag: 05.07.2000
(51) Int. Cl.: A01B 33/02, A01B 71/02, B62D 51/00

(54) **Handgeführtes Landschaftspflegegerät**
Hand guided landscaping implement
Outil pour l'entretien du paysage guidé manuellement

(43) Veröffentlichungstag der Anmeldung: 09.01.2002
(73) Patentinhaber: Julius Tielbürger GmbH & Co. KG, D-32351 Stemwede-Oppenwehe (DE)
(72) Erfinder: Tielbürger, Lydia, 32351 Stemwede-Oppenwehe (DE)
(74) Vertreter: Dantz, Jan Henning

(56) Entgegenhaltungen:
- EP-A- 0 530 127
- AU-B- 422 530
- US-A- 2 668 408
- US-A- 3 243 196
- US-A- 3 649 997
- US-A- 3 816 873
- US-A- 4 678 042
- US-A- 5 285 855

## Beschreibung

Die Erfindung betrifft ein handgeführtes Landschaftspflegegerät mit einem Antriebsmotor und wenigstens einer Achse für die Laufräder sowie einem verstellbaren Schwenkelement, das in verschiedenen Winkelstellungen mittels eines Verriegelungselementes arretierbar ist, welches in ortsfeste Ausnehmungen eingreift.

Das in Rede stehende handgeführte Landschaftspflegegerät kann beispielsweise ein Einachsschlepper mit auswechselbaren Vorsatzgeräten für verschiedene Einsatzzwecke, eine Kehrmaschine und dergleichen sein. Das Schwenkelement kann beispielsweise ein dreieckförmiger oder U-förmiger Führungslenker sein. Die jeweilige Form richtet sich nach der Auslegung des Landschaftspflegegerätes. Die Arretierung des Führungslenkers in verschiedenen Winkelstellungen ist unter anderem notwendig, damit die freien, mit den Händen ergriffenen Enden des Führungslenkers in Abhängigkeit von der Körpergröße der das Landschaftspflegegerät führenden Person in eine ergonomisch günstige Höhe gebracht werden können.

Bei den bisher bekannten, handgeführten Landschaftspflegegeräten erfolgt die Verriegelung durch Betätigen eines schwenkbaren Griffes, an dem ein Bowdenzug angebracht ist, der einen Stift oder einen Bolzen entgegen der Wirkung einer Feder aus der jeweiligen Ausnehmung herauszieht.

Ferner ist aus der US-A-2 668 408 ein Balkenmäher bekannt, der mit einem aus Rohr gefertigten Verstellhebel ausgerüstet ist, in dem eine Stange verschiebbar geführt ist, die mit einem Ende in eine der Zahnlücken eines Zahnsegmentes eingreift, so dass dieser Verstellhebel in verschiedenen Winkelstellungen arretiert ist.

Aus der AU-B-422 530 ist ein Rasenmäher bekannt, dessen zweiteiliger Führungslenker in zwei verschiedene Winkelstellungen arretiert werden kann. Dazu sind am Gehäuse zwei beabstandete Platten angeordnet, an denen der Führungsholm schwenkbar gelagert ist. Jede Platte ist mit zwei Ausnehmungen versehen, in die die Endbereiche einer in einem Langloch verschiebbar geführten Verriegelungsstange eingreift. Diese Verriegelungsstange muss von Hand betätigt werden, so dass die Verstellung äußerst umständlich und ungünstig ist.

Schließlich ist aus der US-A-3 243 196 noch ein Rasenmäher mit einem verstellbaren Führungslenker bekannt. Am Gehäuse des Rasenmähers ist eine Platte angebracht, die mit einer Lochreihe versehen ist. In einem dieser Löcher greift ein Bolzen ein, der durch das Ende des Führungslenkers geführt ist. Dadurch lässt sich auch der Führungslenker in verschiedenen Winkelstellungen arretieren. Auch bei dieser Ausführung muss die Arretierung in gebückter Stellung betätigt werden.

Die zuvor beschriebenen Ausführungen sind aufgrund der Anzahl der Bauteile konstruktiv aufwendig und entsprechend kostenintensiv. Bei der Ausführung mit einem Griff und einem Bowdenzug ist die notwendige Kraft zu schwenken des Betätigungsgriffes verhältnismäßig groß, da der Griff unmittelbar an seinem Drehpunkt erfasst wird.

Der Erfindung liegt die Aufgabe zugrunde, ein handgeführtes Landschaftspflegegerät der eingangs näher beschriebenen Art so auszubilden, dass die Anzahl der Bauteile zur Arretierung des Schwenkelementes gegenüber den bekannten Ausführungen reduziert wird und dass zum Lösen der Arretierung ein geringerer Kraftbedarf notwendig ist.

Die gestellte Aufgabe wird wie beansprucht gelöst, indem das Verriegelungselement ein elastischer Schenkel eines aus einem einzigen Bauteil bestehendes Verriegelungsgestänges ist, welches den quer oder annähernd quer zur Mittellängsachse des Landschaftspflegegerätes stehenden Verriegelungsstab und einen zweiten Schenkel aufweist, wobei der Verriegelungsstab im an den Schnittpunkt angrenzenden Bereich in die jeweilige Ausnehmung eingreifbar angeordnet ist.

Da die Länge des Verriegelungselementes relativ groß ist, ist zu dessen Verformung zur Entriegelung des Schwenkelementes eine relativ geringe Kraft notwendig. Bedingt durch die Elastizität springt er selbsttätig durch die aufgebauten Rückstellkräfte in die jeweilige Ausnehmung. Es entfallen deshalb zusätzliche Federn und deren Bauteile, die zur Festlegung und Führung notwendig sind. Der Verriegelungsstab besteht aus einem geeigneten Werkstoff, vorzugsweise aus Stahl. Da das Verriegelungselement ein Schenkel des Entriegelungsgestänges ist, ergibt sich eine konstruktiv einfache Ausführung. Die Länge des Verriegelungsstabes wird optimiert, wenn der zweite Schenkel des Verriegelungsgestänges gegenüber der Mittellängsachse des Landschaftspflegegerätes seitlich versetzt ist.

Das Verriegelungsgestänge besteht im wesentlichen aus einem winkelförmigen Hebel, wobei der Verriegelungsstab quer zur Mittellängsachse des Landschaftspflegegerätes steht. Vorzugsweise steht der Verriegelungsstab im verriegelnden Zustand rechtwinklig zur Mittellängsachse. Es ist jedoch ebenso denkbar, dass er unter einem spitzen oder einem stumpfen Winkel zur Mittellängsachse des Landschaftspflegegerätes steht. Um die Elastizität des Verriegelungsstabes zu erreichen, ist eine bestimmte Länge notwendig. Diese wird durch den Versatz gegenüber der Mittellängsachse des Landschaftspflegegerätes erreicht. Die Elastizität ist gegeben, wenn der freie, dem Schnittpunkt der beiden Schenkel abgewandt liegende Endbereich des Verriegelungsstabes eingespannt ist. die Arretierung des Führungslenkers in der jeweiligen Winkelstellung ist außerdem besonders einfach, wenn die Ausnehmungen zum Eingriff des Verriegelungsstabes ein Zahnsegment bilden, welches mit einem parallel oder annähernd parallel zum Verriegelungsstab stehenden Holm des Führungslenkers fest verbunden ist. Der quer zum Verriegelungsstab stehende Schenkel des Verriegelungsgestänges ist so gestaltet, dass dieser entweder mit dem Fuß oder mit der Hand betätigt werden kann. Dazu ist zweckmäßigerweise das freie Ende dieses Schenkels abgewinkelt.

Anhand der beiliegenden Zeichnungen wird die Erfindung noch näher erläutert. Es zeigen:
- Figur 1: den Führungslenker als Schwenkelement mit dem zugeordneten Verriegelungsgestänge des erfindungsgemäßen Landschaftspflegegerätes in einer Draufsicht, rein schematisch,
- Figur 2: den Führungslenker als Schwenkelement mit dem Verriegelungsgestänge in einer anderen Ausführungsform und in einer Seitenansicht, und
- Figur 3: eine Einzelheit, das an einem Holm des Führungslenkers festgesetzte Zahnsegment mit dem eingreifenden Verriegelungsstab.

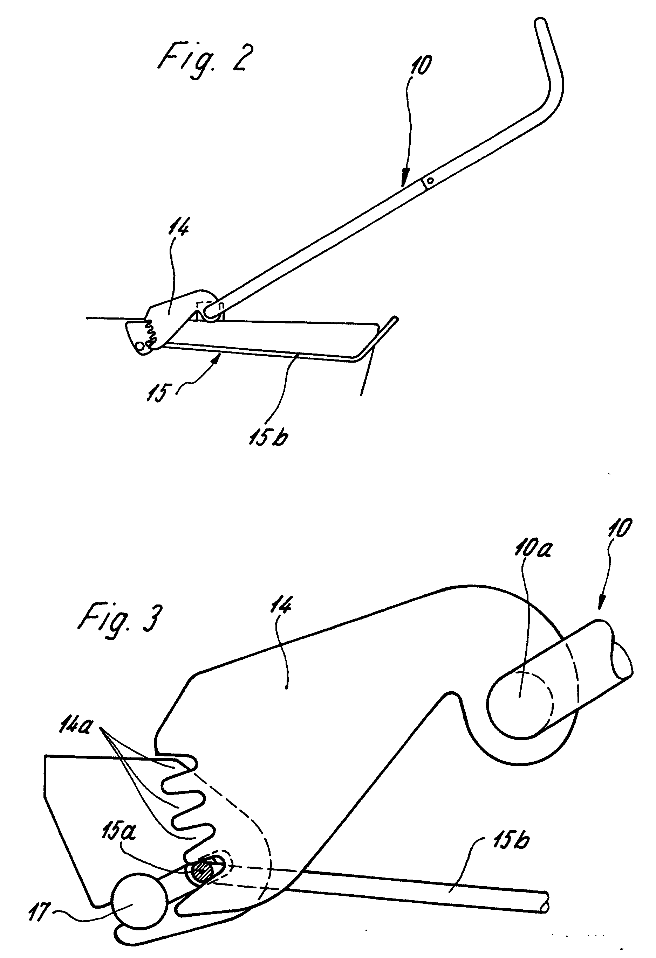

In den dargestellten Ausführungsbeispielen ist der Führungslenker 10 des aus Darstellungsgründen nicht näher dargestellten Landschaftspflegegerätes U-förmig ausgebildet. Im Gegensatz zu der gezeichneten Ausführung könnte er jedoch auch dreieckförmig oder annähernd dreieckförmig gestaltet sein. Der mittlere Holm 10a des Führungslenkers 10 ist schwenkbar an einem Bauteil 11 des Landschaftspflegegerätes mittels zweier Lager 12 und 13 gelagert. Die beiden Seitenholme 10b und 10c des Führungslenkers 10 stehen parallel zueinander und sind in einem gleichen Abstand zur Mittellängsachse des Landschaftspflegegerätes versetzt. Auf den mittleren Holm 10a ist ein in der Figur 3 genauer dargestelltes Zahnsegment 14 befestigt, welches ebenfalls gegenüber der Mittellängsachse des Landschaftspflegegerätes zur Seite hin versetzt ist. Das Zahnsegment 14 zeigt zu der den freien Enden der seitlichen Holme 10b, 10c abgewandten Seite. Am Bauteil des Landschaftspflegegerätes ist ein winkelförmiges Verriegelungsgestänge 15 angebracht, welches aus einem quer oder annähernd quer zur Mittellängsachse des Landschaftspflegegerätes stehenden Verriegelungsstab 15a und einem zweiten Schenkel 15b besteht. Im dargestellten Ausführungsbeispiel steht der zweite Schenkel 15b rechtwinklig zum Verriegelungsstab 15a, wenn dieser in eine Ausnehmung des Zahnsegmentes 14 eingreift. Das freie Ende des Verriegelungsstabes 15a ist in einer Öse 16 oder einem ähnlichen Bauteil festgelegt. Das freie Ende des zweiten Schenkels 15b ist ebenfalls abgewinkelt.

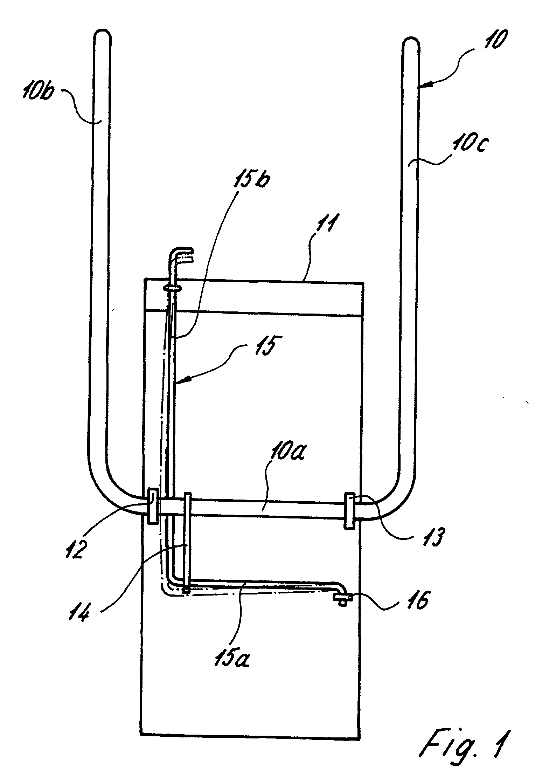

Bei der Ausführung nach der Figur 1 liegt dieses freie Ende so, daß es günstig mit einer Hand ergriffen werden kann, während bei der Ausführung nach der Figur 2 das freie Ende nach oben abgewinkelt ist, so daß der zweite Schenkel 15b mit dem Fuß gedrückt werden kann.

Gemäß der Figur 3 ist das Zahnsegment 14 mit vier Ausnehmungen 14a für den Verriegelungsstab 15a ausgestattet. Die Figur 1 zeigt, daß der Verriegelungsstab 15a so weit elastisch verformt werden kann, daß er außer Eingriff mit der jeweiligen Ausnehmung 14a kommt. Damit es jedoch nicht zu einer bleibenden Verformung kommt, ist die Außereingriffsstellung durch einen Anschlag 17 begrenzt.

Die Erfindung ist nicht auf die dargestellten Ausführungsbeispiele beschränkt. Wesentlich ist, daß die Arretierung des Schwenkelements 10 durch den elastisch verformbaren Verriegelungsstab erfolgt, so daß auf Federn oder ähnliche Bauteile verzichtet werden kann.

## Patentansprüche

1. Handgeführtes Landschaftspflegegerät mit einem Antriebsmotor und wenigstens einer Achse für die Laufräder sowie einem verstellbaren Schwenkelement (10), das in verschiedenen Winkelstellungen mittels eines Verriegelungselementes (15a) arretierbar ist, welches in Ausnehmungen (14a) eingreift, **dadurch gekennzeichnet, dass** das Verriegelungselement ein elastischer Verriegelungsstab (15a) eines aus einem einzigen Bauteil bestehendes Verriegelungsgestänge (15) ist, welches den quer oder annähernd quer zur Mittellängsachse des Landschaftspflegegerätes stehenden Verriegelungsstab (15a) und einen zweiten Schenkel (15b) aufweist, wobei der Verriegelungsstab (15a) im an den Schnittpunkt angrenzenden Bereich in die jeweilige Ausnehmung (14a) eingreifbar angeordnet ist.

2. Handgeführte Landschaftspflegegerät nach Anspruch 1, **dadurch gekennzeichnet, dass** der zweite Schenkel (15b) des Verriegelungsgestänges (15) gegenüber der Mittellängsachse des Landschaftspflegegerätes seitlich versetzt ist.

3. Handgeführtes Landschaftspflegegerät nach Anspruch 1, **dadurch gekennzeichnet, dass** das Verriegelungsgestänge (15) im wesentlichen aus einem winkelförmigen Hebel besteht.

4. Handgeführtes Landschaftspflegegerät nach einem oder mehreren der vorhergehenden Ansprüche 1 bis 3, **dadurch gekennzeichnet, dass** das freie, dem Schnittpunkt der beiden Schenkel abgewandte Ende des Verriegelungsstabes (15a) eingespannt ist.

5. Handgeführtes Landschaftspflegegerät nach einem oder mehreren der vorhergehenden Ansprüche 1 bis 4, **dadurch gekennzeichnet, dass** die Ausnehmungen (14a) zum Eingriff des Verriegelungsstabes (15a) ein Zahnsegment (14) bilden, welches mit einem parallel oder annähernd parallel zum Verriegelungsstab (15a) stehenden Holm des Schwenkelementes (10) drehfest verbunden ist.

6. Handgeführtes Landschaftspflegegerät nach einem oder mehreren der vorhergehenden Ansprüche 1 bis 5, **dadurch gekennzeichnet, dass** der zweite Schenkel (15b) des Verriegelungsgestänges (15) als Hand- oder Fußbetätigungshebel ausgebildet ist.

## Claims

1. Hand-guided landscaping implement with a driving motor and at least one axle for the running wheels and an adjustable pivoting element (10) which can be locked in various angular positions by means of a locking element (15a) which engages in recesses (14a), **characterized in that** the locking element is an elastic locking bar (15a) of a locking linkage (15), which comprises a single component which has the locking bar (15a), which is located transversely or approximately transversely with respect to the central longitudinal axis of the landscaping implement, and a second limb (15b), with the locking bar (15a) being arranged in the region adjacent to the intersecting point in a manner such that it can engage in the respective recess (14a).

2. Hand-guided landscaping implement according to Claim 1, **characterized in that** the second limb (15b) of the locking linkage (15) is offset laterally with respect to the central longitudinal axis of the landscaping implement.

3. Hand-guided landscaping implement according to Claim 1, **characterized in that** the locking linkage (15) essentially comprises an angular lever.

4. Hand-guided landscaping implement according to one or more of the preceding Claims 1 to 3, **characterized in that** the free end of the locking bar (15a), which end faces away from the intersecting point of the two limbs, is clamped in place.

5. Hand-guided landscaping implement according to one or more of the preceding Claims 1 to 4, **characterized in that** the recesses (14a) for the engagement of the locking bar (15a) form a toothed segment (14) which is connected in a rotationally fixed manner to a shaft of the pivoting element (10), which shaft is parallel or approximately parallel to the locking bar (15a).

6. Hand-guided landscaping implement according to one or more of the preceding Claims 1 to 5, **characterized in that** the second limb (15b) of the locking linkage (15) is designed as a hand or foot actuation lever.

## Revendications

1. Appareil d'entretien du paysage guidé à la main comportant un moteur d'entraînement et au moins un essieu pour les roues ainsi qu'un élément pivotant réglable (10) qui peut être bloqué dans différentes positions angulaires au moyen d'un élément de verrouillage (15a) lequel s'engrène dans des creux (14a), **caractérisé en ce que** l'élément de verrouillage est une barre de verrouillage (15a) d'une tringle de verrouillage (15) constituée d'un composant unique, laquelle comporte la barre de verrouillage (15a) se trouvant transversalement ou à peu près transversalement à l'axe longitudinal médian de l'appareil d'entretien du paysage et un second montant (15b), la barre de verrouillage (15a) étant disposée de manière à pouvoir s'engrener, au niveau de la zone adjacente au point d'intersection, dans le creux respectif (14a).

2. Appareil d'entretien du paysage guidé à la main selon la revendication 1, **caractérisé en ce que** le second montant (15b) de la tringle de verrouillage (15) est latéralement décalé par rapport à l'axe longitudinal médian de l'appareil d'entretien du paysage.

3. Appareil d'entretien du paysage guidé à la main selon la revendication 1, **caractérisé en ce que** la tringle de verrouillage (15) est composée pour l'essentiel d'un levier angulaire.

4. Appareil d'entretien du paysage guidé à la main selon une ou plusieurs des revendications précédentes 1 à 3, **caractérisé en ce que** l'extrémité libre de la barre de verrouillage (15a), ne faisant pas face au point d'intersection des deux montants est maintenue.

5. Appareil d'entretien du paysage guidé à la main selon une ou plusieurs des revendications précédentes 1 à 4, **caractérisé en ce que** les creux (14a), pour l'engrènement de la barre de verrouillage (15a), forment un segment denté (14), lequel est relié de manière rigide à la torsion à une traverse de l'élément pivotant (10) parallèle ou approximativement parallèle à la barre de verrouillage (15a).

6. Appareil d'entretien du paysage guidé à la main selon une ou plusieurs des revendications précédentes 1 à 5, **caractérisé en ce que** le second montant (15b) de la tringle de verrouillage (15) est réalisé sous la forme de levier à actionnement à la main ou au pied.
